Europäisches Patentamt

European Patent Office

Office européen des brevets

(11) Veröffentlichungsnummer : **0 170 874**
**B1**

(19)

(12) **EUROPÄISCHE PATENTSCHRIFT**

(45) Veröffentlichungstag der Patentschrift :
28.03.90

(51) Int. Cl.⁵ : **B 29 C 47/04**, B 29 C 47/08,
B 29 C 47/56 // B29L30:00

(21) Anmeldenummer : 85108149.7

(22) Anmeldetag : 01.07.85

(54) Strangpresskopf.

(30) Priorität : 21.07.84 DE 3427022

(43) Veröffentlichungstag der Anmeldung :
12.02.86 Patentblatt 86/07

(45) Bekanntmachung des Hinweises auf die Patenterteilung : 28.03.90 Patentblatt 90/13

(84) Benannte Vertragsstaaten :
AT DE FR GB IT NL

(56) Entgegenhaltungen :
DE-A- 262 201
DE-A- 1 704 596
FR-A- 2 534 520
US-A- 3 099 859
US-A- 3 480 998

(73) Patentinhaber : Paul Troester Maschinenfabrik
Am Brabrinke 2-4
D-3000 Hannover 89 (DE)

(72) Erfinder : Gohlisch, Hans-Joachim, Dipl.-Ing.
Am Lindenhofe 32 F
D-3000 Hannover 81 (DE)

(74) Vertreter : Junius, Walther, Dr.
Wolfstrasse 24
D-3000 Hannover 81 (DE)

**Beschreibung**

Die Erfindung betrifft einen Strangpreßkopf zur Herstellung von Profilen aus verschiedenartigen Mischungen, die aus mehreren Schneckenextrudern ausgepreßt werden, welche zu einer Baueinheit zusammengefaßt sind, bestehend aus mindestens drei Kopfteilen : einem fest mit den Extruderzylindern verbundenen Kopfteil und zwei durch eine Teilungsfläche von diesem getrennte beweglichen Kopfteilen mit von ihnen eingeschlossenen Strömungskanälen.

Derartige Stranpreßköpfe sind in verschiedenen Ausführungsformen bekannt geworden. Sie befinden sich an solchen Strangpreßvorrichtungen, die einen Profilstreifen extrudieren, der aus verschiedenen, über und/oder nebeneinander angeordneten Materialien besteht. Oft sind in solchen Strangpreßvorrichtungen die Schneckenextruder huckepackartig übereinander angeordnet, wie z. B. in der DE-A-2622011, sie können aber auch nebeneinander angeordnet sein. Der Strangpreßkopf besteht bei den bekannten Extrusionsanlagen dieser Art aus einem fest mit den Extrudern verbundenen Kopfteil, welches meist in der Mitte einen spitzwinklig in Extrusionsrichtung vorspringenden Block aufweist, dessen spitzwinklig zueinander verlaufende Kanten in Extrusionsrichtung gerichtet sind und zwischen sich Teile der Fließkanäle einschließen. Die beweglichen Teile werden gegen diesen mittleren Vorsprung geklappt und hier im Extrusionsbetrieb durch Klammern verriegelt, die mittels Hydraulikzylindern verschoben werden. Für das Öffnen dieser beweglichen Kopfteile sind gesonderte Hydraulikzylinder vorgesehen. Während bei Strangpreßanlagen dieser Art mit zwei Schneckenextrudern ein mittlerer feststehender Kopfteil und zwei klappbare bewegliche Kopfteile vorgesehen sind, werden Anlagen mit mehr Schneckenextrudern dadurch erweitert, daß beispielsweise zwischen einem beweglichen Kopfteil und dem feststehenden mittleren Kopfteil eine zusätzliche, ebenfalls ein- und auschwenkbare Platte angeordnet wird.

Nachteil aller dieser Strangpreßanlagen ist es, daß der Weg von den Schneckenspitzen bis zur Extrusionsleiste lang ist und die Fließkanäle sich in verschiedenen Teilungsebenen befinden. In diesem langen Weg geht am Ende des Extrusionsvorganges eine erhebliche Menge Material verloren, die bei der Reinigung der Extrusionsanlage nach dem Extrusionsvorgang aus den Strömungskanälen entfernt werden muß und nicht mehr weiter verwendbar ist. Insbesondere beim Hauptextruder einer derartigen Strangpreßanlage fällt die verlorengehende Masse ins Gewicht. Von besonderem Nachteil ist aber, daß der Kopf durch die langen Fließwege einen hohen Fließwiderstand besitzt, der hohe Massetemperaturen und/oder geringere Ausstoßleistungen bewirkt.

Ein weiterer Nachteil besteht darin, daß der Öffnungsvorgang mit dem Entfernen und Beiseiteklappen der Klammern und dem anschließenden Aufklappen der beweglichen Teile einen erheblichen Zeitaufwand erfordert, der an Produktionszeit verlorengeht, wenn eine Umstellung von einer Materialkombination auf eine andere Materialkombination für den Extrusionsvorgang vorgenommen wird. Das gesonderte Zuklappen und Verriegeln mittels der anzuschwenkenden und dann mittels Hydraulikzylindern anzuziehenden Klammern nimmt nach einem Reinigungsvorgang beim Materialwechsel ebenfalls erhebliche Produktionszeiten weg.

Die bekannten Strangpreßköpfe dieser Art sind aber auch nicht einfach herstellbar : Die hohen, in ihnen wirkenden Drucke, die auf große Flächen wirken, erfordern eine sehr robuste Ausführung der Teile des Strangpreßkopfes. Andererseits müssen diese Teile, vor allem in den verschiedenen Teilungsebenen, mit sehr hoher Genauigkeit bearbeitet sein, damit die drei oder mehr Teile fest aneinander schließen.

Die Erfindung vermeidet die Nachteile des Standes der Technik. Es ist die Aufgabe der Erfindung, einen einfacher aufgebauten und einfacher herstellbaren Strangpreßkopf zu schaffen, für den weit weniger Kräfte benötigt werden, um ihn im Extrusionsbetrieb geschlossen zu halten und der sich durch kurze Fließwege, insbesondere für die aus dem Hauptextrusionszylinder kommende Masse, auszeichnet.

Die Erfindung besteht darin, daß die Teilungsfläche eine Ebene ist oder aus stumpfwinklig aneinander grenzenden Ebenen besteht und daß ein Strömungskanal diese Teilungsfläche durchsetzt und mindestens ein Stück eines anderen Strömungskanales in dieser Teilungsfläche liegt.

Ein derartiger Strangpreßkopf ist in der Herstellung erheblich einfacher als bekannte Strangpreßköpfe. Er weist kürzere Fließwege auf. Insbesondere der Fließweg für die aus dem Hauptzylinder austretende Masse ist außerordentlich kurz. Das führt zu einem geringen Kopfwiderstand, geringer Materialverweilzeit und zu geringen Materialverlusten bei der Umstellung auf andere Materialkombinationen. Das führt aber auch zu geringeren, auf die beweglichen Teile wirkenden Kräfte, so daß diese beweglichen Teile des Strangpreßkopfes mit erheblich weniger Material hergestellt werden können. Gleichzeitig ermöglicht es die Zuhaltung der beiden beweglichen Kopfteile mit geringeren Kräften.

Besonders vorteilhaft ist es, wenn die beweglichen Kopfteile um zwei parallele Achsen verschwenkbar sind und hydraulische Verschwenkzylinder angebracht sind, die während des Extruderbetriebes unter Druck als Zuhaltevorrichtung verbleiben. Dann können die Klammern, die im Stande der Technik üblich sind, entfallen. Die Öffnungszeiten und die Schließzeiten für den Strangpreßkopf für eine vorzunehmende Reinigung werden erheblich kürzer.

Besonders vorteilhaft ist es, wenn der ganze Strömungskanal in der Teilungsebene liegt.

Als vorteilhaft hat es sich auch erwiesen, wenn zwischen der Buchse des Hauptextruders und den beweglichen Kopfteilen ein ein- oder mehrteiliger Fließkanaleinsatz angeordnet ist. Dieser ist einfach auswechselbar, er braucht nicht besonders befestigt zu werden, er gibt der aus dem Hauptextruder austretenden Masse eine für die Extrusion geeignete Form.

Das Wesen der Erfindung ist nachstehend anhand eines in der Zeichnung schematisch dargestellten Ausführungsbeispieles näher erläutert. Es zeigen :

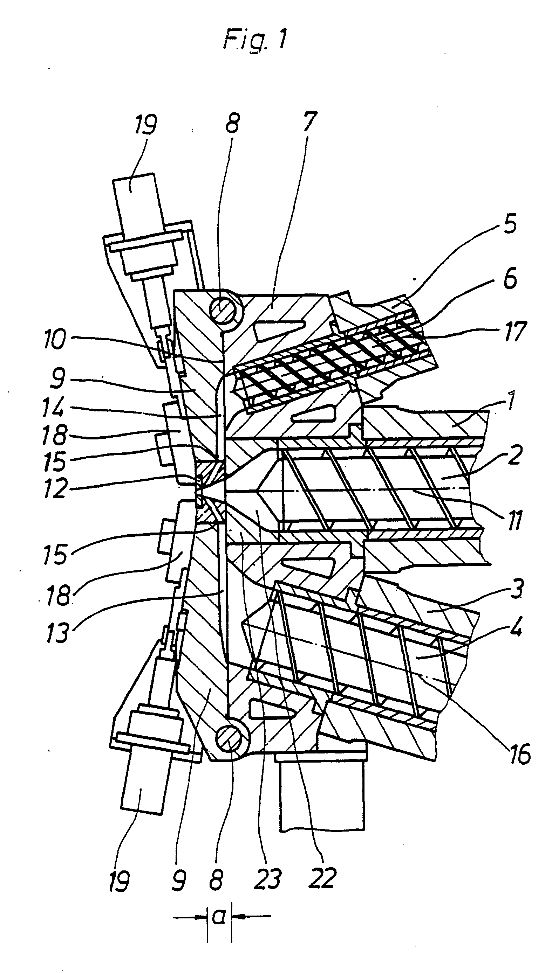

Fig. 1 einen Schnitt durch den Strangpreßkopf und einen Teil der Strangpreßanlage mit drei Extrudern,

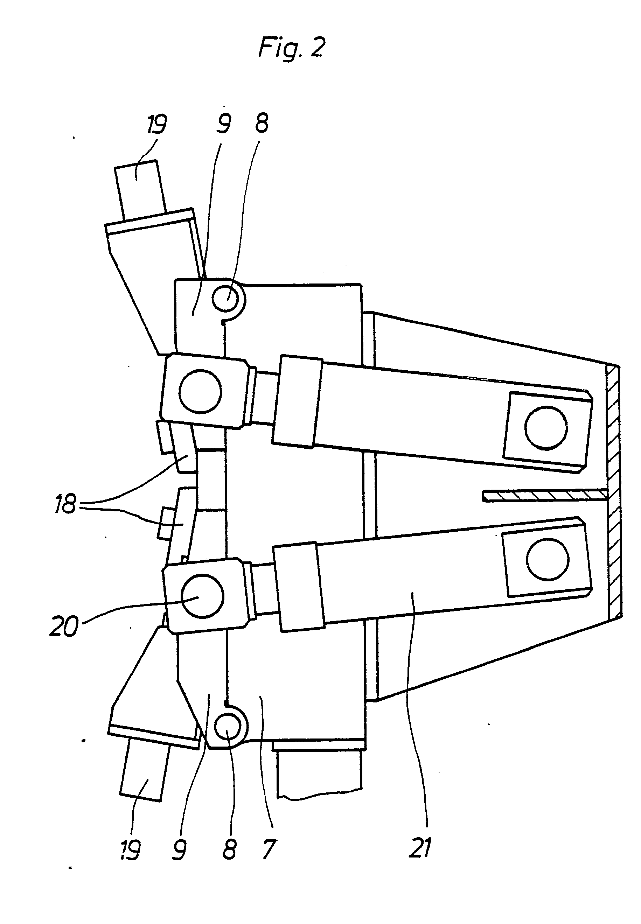

Fig. 2 eine Seitenansicht des Gegenstandes der Fig. 1.

Die Strangpreßanlage besteht aus dem Hauptzylinder 1 mit der Schnecke 2 und beidseitig dieses Hauptzylinders 1 angeordneten weiteren Schneckenextrudern, die Zylinder 3, 5 und Schnecken 4, 6 aufweisen. Diese drei Schneckenextruder drücken das in ihnen komprimiert geförderte Material in den Strangpreßkopf, der aus einem festen Kopfteil 7 besteht, welches fest mit den drei Schneckenextrudern 1 bis 6 verbunden ist. An zwei gegenüberliegenden Kanten dieses festen Kopfteiles 7 befinden sich Gelenke 8, mit denen die beiden beweglichen Kopfteile 9 mit dem festen Hauptteil 7 verbunden sind.

Die Teilungsfläche 10 zwischen den beiden beweglichen Kopfteilen 9 und dem festen Kopfteil 7 ist eine Ebene. Dadurch sind die drei Teile 7, 9 des Strangpreßkopfes sehr einfach zu fertigen. Diese Teilungsfläche wird von der Achse 11 des Hauptextruders 1, 2 vorzugsweise senkrecht durchsetzt. In kurzem Abstand a hinter dieser Teilungsebene 10 (von dem Hauptextruder 1, 2 aus gesehen), befindet sich die Spritzleiste 12, so daß das aus dem Hauptextruder 1, 2 austretende zu extrudierende Material einen außerordentlich kurzen Weg von der Spitze der Schnecke 2 zur Spritzleiste 12 hat.

Die Strömungskanäle 13, 14 der beiden oberhalb und unterhalb oder seitlich angeordneten Schneckenextruder 3, 4 und 5, 6 verlaufen direkt an der Teilungsfläche 10, wobei sie entweder an dieser Teilungsfläche anliegen, so daß die Teilungsfläche eine Wandung des Strömungskanales 13, 14 bildet oder wobei dieser Strömungskanal in dieser Teilungsfläche liegt. Die Strömungskanäle 13, 14 können entweder direkt in die Kopfteile oder auch in austauschbare Einsätze eingearbeitet sein. Kurz vor Erreichen des Bereiches des Strömungskanales des Hauptzylinders 1, 2 biegen die Strömungskanäle 13, 14 am Punkt 15 zur Spritzleiste 12 hin ab. Da die Strömungskanäle 13, 14 einen stumpfen Winkel, der vorzugweise zwischen 90 und 135˚ liegt, mit den Achsen 16, 17 der Schneckenextruder 3, 4 ; 5, 6 einschließen, sind auch hier die Fließwege recht kurz gegenüber dem Stande der Technik.

Die beiden beweglichen Kopfteile lassen sich als schmale, genähert plattenförmige Bauteile gestalten. Auf ihrer den Schneckenextrudern zugewandten Seite befinden sich die Strömungskanäle 13, 14, auf der anderen, den Schneckenextrudern abgewandten Seite befinden sich Klemmvorrichtungen 18 und ihnen zugeordnete Bewegungsvorrichtungen, z. B. Hydraulikzylinder 19, für das Festklemmen der Spritzleiste 12.

An den beweglichen Kopfteilen 9 greifen, gelagert in Lagerzapfen 20, Hydraulikzylinder-Kolben-Einheiten 21 an, die sowohl dem Öffnen als auch dem Schließen als auch dem Verschlossenhalten während des Estrusionsvorganges dienen.

Unmittelbar hinter dem Zylinder 1 des Hauptextruders 1, 2 befindet sich ein Fließkanaleinsatz 23, der den Fließkanal 22 für die aus dem Hauptextruder austretende Masse bildet. Dieser Fließkanaleinsatz ist ein relativ kurzes Bauteil.

## Patentansprüche

1. Strangpreßkopf zur Herstellung von Profilen aus verschiedenartigen Mischungen, die aus mehreren Schneckenextrudern ausgepreßt werden, welche zu einer Baueinheit zusammengefaßt sind, bestehend aus mindestens drei Kopfteilen : einem fest mit den Extruderzylindern verbundenen Kopfteil und zwei durch eine Teilungsfläche von diesen getrennten beweglichen Kopfteilen mit von ihnen eingeschlossenen Strömungskanälen, dadurch gekennzeichnet, daß die Teilungsfläche eine Ebene (10) ist oder aus stumpfwinklig aneinander grenzenden Ebenen besteht und daß ein Strömungskanal (22) diese Teilungsfläche (10) durchsetzt und mindestens ein Stück eines anderen Strömungskanales (13) an bzw. in dieser Teilungsfläche (10) liegt.

2. Strangpreßkopf nach Anspruch 1, dadurch gekennzeichnet, daß die beweglichen Kopfteile (9) um zwei parallele Achsen (8) verschwenkbar sind und hydraulische Verschwenkzylinder (21) angebracht sind, die während des Extrierbetriebes als Zuhaltung unter Druck verbleiben.

3. Strangpreßkopf nach Anspruch 1, dadurch gekennzeichnet, daß der ganze Strömungskanal (13, 14) in der Teilungsebene (10) liegt.

4. Strangpreßkopf nach Anspruch 1, dadurch gekennzeichnet, daß zwischen der Buchse des Hauptextruders (1, 2) und den beweglichen Kopfteilen (9) des Strangpreßkopfes ein Fließkanaleinsatz (23) angeordnet ist.

## Claims

1. An extrusion head for the production of profiles consisting of different kinds of mixtures which are extruded from a plurality of screw extruders combined to form one structural unit, comprising at least three head components : one head component which is permanently connected to the extruder cylinders and two movable head components which are separated from the first head component by a parting surface and which comprise flow channels enclosed thereby, characterised in that the parting surface is one plane (10) or is formed by planes which adjoin one another at an obtuse angle, and that one flow channel (22) passes through this parting surface (10) and at least one part of another flow channel (13) is located on or in this parting surface (10).

2. An extrusion head as claimed in Claim 1, characterised in that the movable head components (9) can be swivelled about two parallel axes (8) and hydraulic swivel cylinders (21) are provided which, during the extrusion operation, remain under pressure to act as a locking device.

3. An extrusion head as claimed in Claim 1, characterised in that the entire flow channel (13, 14) is located in the parting plane (10).

4. An extrusion head as claimed in Claim 1, characterised in that a flow channel insert (23) is arranged between the bushing of the main extruder (1, 2) and the movable head components (9) of the extrusion head.

**Revendications**

1. Tête d'extrudeuse pour la fabrication de profils constitués de mélanges de différents types qui sont extrudés sous pression à partir de plusieurs extrudeuses à vis qui sont groupées en un ensemble constitué d'au moins trois pièces de tête : une pièce de tête fixe liée aux cylindres de l'extrudeuse, et deux pièces de tête mobiles qui sont séparées de ceux-ci par une surface de séparation et dans lesquelles sont enclos des canaux d'écoulement, caractérisée en ce que la surface de séparation est un plan (10) ou bien est constituée de plans qui viennent l'un contre l'autre en formant un angle obtus, et en ce qu'un canal d'écoulement (22) traverse cette surface de séparation (10), et qu'au moins une portion d'un autre canal d'écoulement (13) est située sur ou dans cette surface de séparation (10).

2. Tête d'extrudeuse selon la revendication 1, caractérisée en ce que les pièces de tête mobiles (9) peuvent pivoter autour de deux axes parallèles (8), et en ce que sont rapportés des vérins hydrauliques de pivotement (21) qui, pendant le processus d'extrusion, restent sous pression en tant que mécanisme de maintien.

3. Tête d'extrudeuse selon la revendication 1, caractérisée en ce que la totalité du canal d'écoulement (13, 14) est située dans le plan de séparation (10).

4. Tête d'extrudeuse selon la revendication 1, caractérisée en ce qu'entre le manchon de l'extrudeuse principale (1, 2) et les pièces de tête mobiles (9) de la tête d'extrudeuse est disposée une garniture de canal d'écoulement (23).

## Fig. 1

Fig. 2